# EUROPÄISCHE PATENTSCHRIFT

(11) **EP 0 768 210 B1**
(45) Veröffentlichungstag und Bekanntmachung des Hinweises auf die Patenterteilung: **09.08.2000**
(21) Anmeldenummer: 96116216.1
(22) Anmeldetag: 10.10.1996
(51) Int. Cl.: B60R 13/02

(54) **Klemmleiste für die Innendachbespannung zur Verwendung bei Fahrzeugen mit Schiebedach sowie Verfahren zu deren Herstellung**
Clamping strip for internal roof coverings in vehicles with sliding roofs and method of making the same
Tringle à bride pour recouvrements intérieurs de toits pour véhicules comportant des toits coulissants et procédé de sa fabrication

(30) Priorität: 13.10.1995 DE 19538269
(43) Veröffentlichungstag der Anmeldung: 16.04.1997
(73) Patentinhaber: Weigend, Horst, 92721 Störnstein (DE)
(72) Erfinder: Weigend, Horst, 92721 Störnstein (DE)
(74) Vertreter: Wasmeier, Alfons, Dipl.-Ing.

(56) Entgegenhaltungen:
- EP-A- 0 193 011
- EP-A- 0 380 013
- EP-A- 0 383 993
- DE-U- 8 632 788
- GB-A- 2 072 059

## Beschreibung

Die Erfindung bezieht sich auf eine Klemmleiste gemäß Oberbegriff Patentanspruch 1 sowie auf ein Verfahren gemäß Oberbegriff Patentanspruch 3.

Klemmleisten dieser Art sind bekannt. Bekannt ist weiterhin ein für den Einbau in Fahrzeuge geeignetes Hebe- und Schiebedach (EP-A-0 193 011) mit einem in einer Dach-Öffnung befestigbaren Rahmenkonstruktion, die mit einem aus Blech gefertigten Trimmringe mit Z-förmigem Querschnitt am Fahrzeugdach im Bereich der Dachöffnung gehalten ist. Der Trimmring ist als Blech- oder Strangpreßprofilteil ausgebildet.

Bekannt ist weiterhin eine Vorrichtung zum Befestigen eines Dachhimmels einer Schiebedach- oder Schiebehebedachkonstruktion (EP-A-0 380 013). Diese Konstruktion besteht im wesentlichen aus einem U-förmigen Rahmen, an dem Mittels eines S-förmigen Klemmprofils der Dachhimmel durch Festklemmen befestigt ist.

Bekannt ist schließlich eine Flachmaterial-Konstruktion für Fahrzeuge (DE-U-86 32 788), bei der (Konstruktion) mehrere Blechteile dadurch miteinander verbunden sind, daß in einem der Blechteile eine Öffnung mit einer hohlnietenartigen Aufkelchung eingebracht ist, die durch Öffnungen der anderen Blechteile hindurchreicht und hohlnietenartig, d.h. zu einem Hohlniet verformt ist.

Aufgabe der Erfindung ist es, eine Klemmleiste für eine Fahrzeuginnenbespannung zur Verwendung an einem Schiebedach eines Fahrzeugs aufzuzeigen, die bei hoher Stabilität besonders preiswert herstellbar ist. Zur Lösung dieser Aufgabe ist eine Klemmleiste entsprechend dem Patentanspruch 1 ausgebildet.

In Weiterbildung betrifft die Erfindung ein besonders vorteilhaftes Verfahren zum Herstellen einer solchen Klemmleiste entsprechend dem Patentanspruch 3.

Die erfindungsgemäße Klemmleiste besteht aus mehreren Abschnitten, die jeweils als Stahlblech gefertigt und an Übergängen miteinander verbunden sind. Die Besonderheit der erfindungsgemäßen Klemmleiste besteht darin, daß die Verbindung zwischen den einzelnen Abschnitten auch im Bereich des Steges vorgesehen ist, und zwar ebenfalls bevorzugt als Nietverbindung.

Die Herstellung erfolgt im einzelnen so, daß die Abschnitte im flachem Zustand, d.h. vor dem Formen des Steges miteinander verbunden werden, wodurch dann auch die Nietverbindung im Bereich des späteren Steges leicht möglich ist, und daß anschließend in einem Form- bzw. Ziehwerkzeug das Formen des Steges erfolgt.

Weiterbildungen der Erfindung sind Gegenstand der Unteransprüche.

Die Erfindung wird in Folgenden anhand der Figuren an einem Ausführungsbeispiel näher erläutert. Es zeigen:
- Fig. 1: in vereinfachter Darstellung und in Draufsicht eine rahmenartige Klemmleiste gemäß der Erfindung für die Innendachbespannung bei einem PKW-Schiebedach;
- Fig. 2: in vereinfachter Darstellung einen Schnitt entsprechend der Linie I - I der Figur 1;
- Fig. 3: in vereinfachter Darstellung die Verwendung der Klemmleiste der Figur 1 bei einem Dachausschnitt für ein Schiebedach eines Fahrzeuges;
- Fig. 4: in vergrößerter Darstellung und in Draufsicht die Verbindung zwischen zwei aneinander anschließenden Klemmleistenelementen vor dem Fertigstellen der Klemmleiste bzw. vor dem Biegen des Steges;
- Figuren 5, 6 und 7: einen Schnitt der Figur 3 im Bereich der Verbindung vor dem Verbinden der Abschnitte, nach dem Verbinden der Abschnitte und nach dem Abwinkeln des Steges;
- Fig. 8: in vereinfachter Darstellung ein Werkzeug zum Abwinkeln des Steges der Klemmleiste.

In den Figuren ist 1 eine rahmenartige Klemmleiste, die bei Fahrzeugen, insbesondere Personenkraftwagen dazu verwendet wird, die an der Innenseite des Daches 4 eines Fahrzeuges vorgesehene Bespannung 2 (Fahrzeughimmel) im Bereich des Ausschnittes 3 zu fixieren, der im Fahrzeugdach 4 für ein nicht dargestelltes Schiebedach vorgesehen ist.

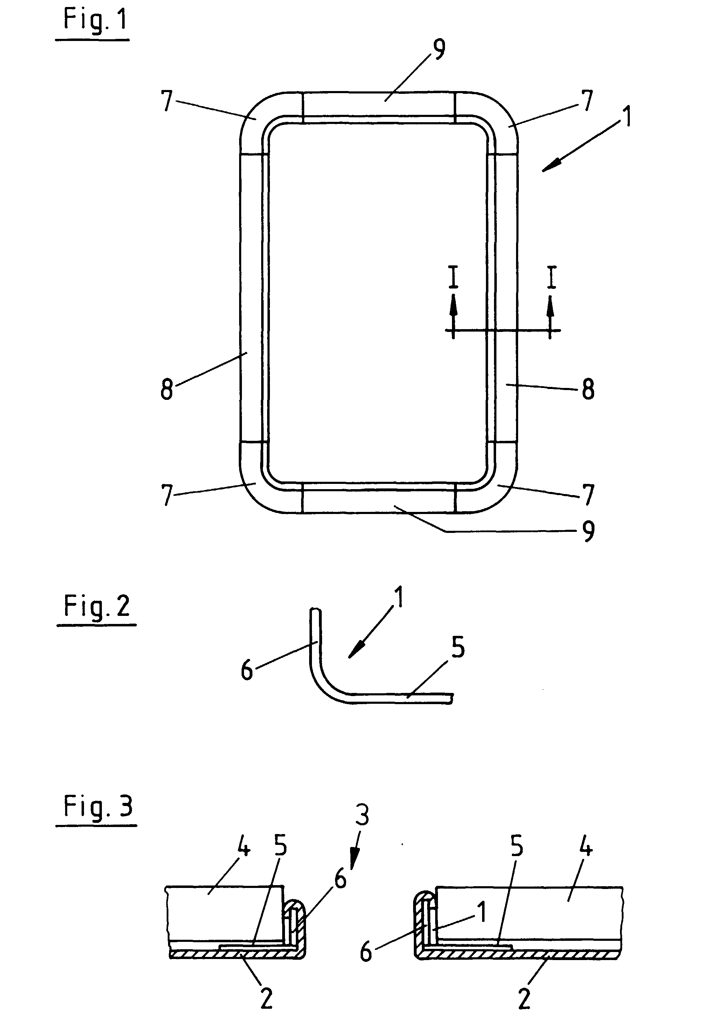

Die Klemmleiste 1 besitzt hierfür auf ihrer gesamten Länge einen jeweils nach außen wegstehenden Schenkel 5 und innenliegend, d.h. die Rahmenöffnung der Klemmleiste 1 umschließend, einen gegenüber dem Schenkel 5 aufgebogenen Steg 6, der bei der Darstellung der Figur 2 nach oben weist, während der Schenkel 5 im wesentlichen in der Rahmenebene der Klemmleiste verlaufend vorgesehen ist. Über die Klemmleiste 1 wird die Bespannung 2 in der in der Figur 3 wiedergegebenen Weise gespannt, und zwar derart, daß sich diese Bespannung über die außenliegende Seite des Schenkels 5, über die außenliegende Seite des Steges 6 und über dessen oberen Rand auch über einen Teil der innenliegenden Seite des Steges 6 erstreckt und dort in geeigneter Weise, beispielsweise durch Festkleben fixiert ist. Die Klemmleiste 1 wird dann in den Ausschnittes 3 eingesetzt, so daß der Steg 6 der Innenfläche des Ausschnittes 3 benachbart liegt. Mit dem Schenkel 5 wird die Klemmleiste 1 beispielsweise durch Einrasten an Fixierelementen befestigt, die an der Innenfläche des Fahrzeugdaches 1 vorgesehen sind.

Wie die Figuren zeigen, besteht die in sich geschlossene, rahmenartige Klemmleiste 1 bei der dargestellten Ausführungsform aus vier bogenförmig gekrümmten, Eckstücke bildenden Abschnitten 7 und aus diese verbindenden Abschnitten 8 bzw. 9, von denen die Abschnitte 8 die Längsseiten und die Abschnitte 9 die Querseiten des im wesentlichen rechteckförmigen Rahmens bzw. der wesentlichen rechteckförmigen Klemmleiste 1 bilden. An den Übergängen 11 überlappen sich die Abschnitte 7 und 8 bzw. 7 und 9 und sind dort über Verbindungspunkte 10 miteinander verbunden. Wenigstens ein Verbindungspunkt befindet sich dabei an jedem Übergang am Steg und wenigstens zweiVerbindungspunkte 10 am Schenkel 5, dessen Breite größer ist als die Höhe des Steges 6. Die Verbindungspunkte 10 liegen bei der dargestellten Ausführungsform an jedem Übergang 11 mit ihren Achsen in einer Ebene senkrecht zur Längserstreckung des jeweils anschließenden Abschnittes 8 bzw. 9.

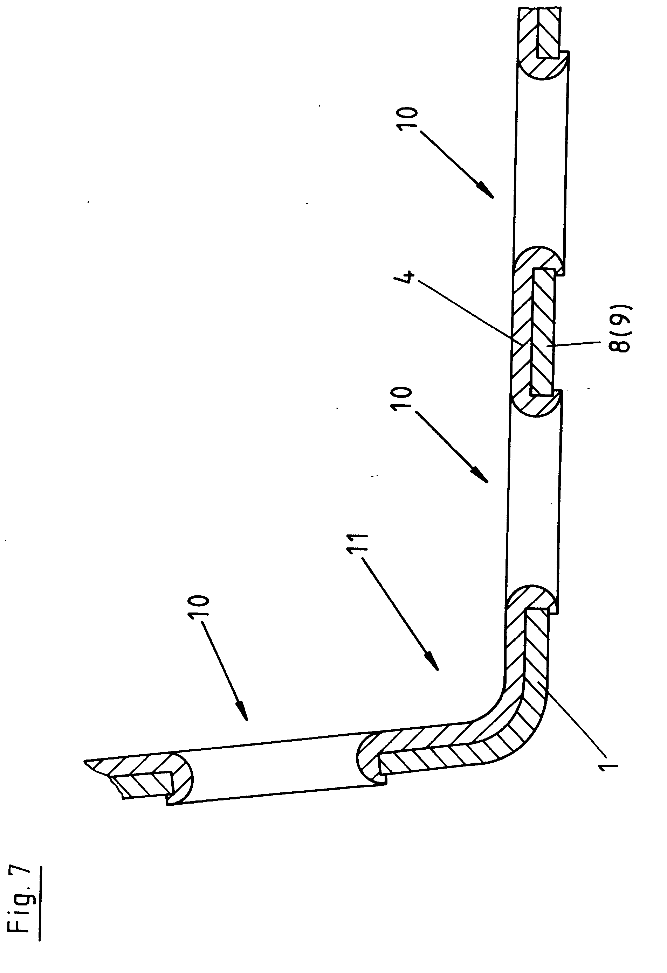

Wie insbesondere der Figur 7 zu entnehmen ist, ist die Verbindung an jedem Übergang 11 eine Hohlniet-Verbindung.

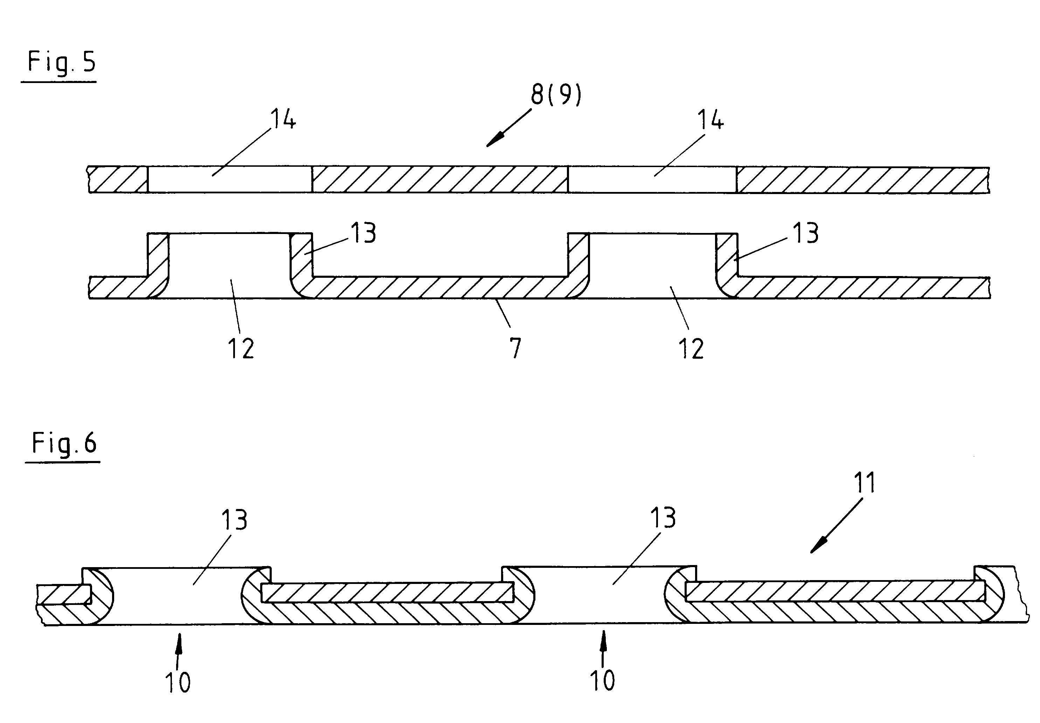

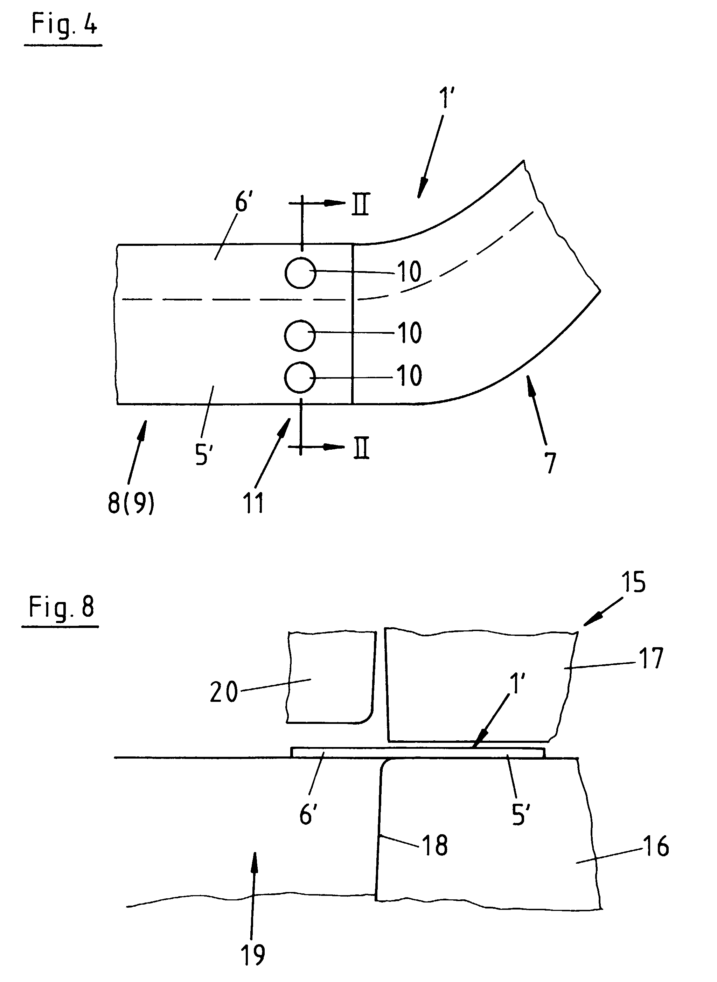

Die Abschnitte 7 - 8 werden jeweils durch Stanzen aus Stahlblech zunächst flach hergestellt. Hierbei werden jeweils an einem dieser Elemente, beispielsweise an den Elementen 7 für die Verbindungspunkte 10 Öffnungen 12 eingestanzt und hierbei das Material des verwendeten Bleches so verformt, daß im Bereich jeder Öffnung eine diese Öffnung umschließende und über die eine Oberflächenseite des Bleches wegstehende zylinderförmige oder hohlnietartige Aufkelchung 13 entsteht. In die anderen Abschnitte 7 und 8 werden im Bereich des Übergangs 11 Öffnungen 14 eingestanzt, deren Querschnitt so gewählt ist, daß die Aufkelchungen 13 in jeweils eine Öffnung 14 eingeführt werden können, so daß dann jede Aufkelchung 13 über die dem Abschnitt 7 abgewandte Oberflächenseite des anschließenden Abschnittes 8 bzw. 9 vorsteht. Zum Verbinden der paketartig übereinanderliegenden, flachen Abschnitte 7 und 8 bzw. 7 und 9 erfolgt dann durch Vernieten an den Aufkelchungen 13, d.h. durch Verformen der Aufkelchungen, wie dies in der Figur 6 dargestellt ist. Erst nach dem Verbinden der Abschnitte 7 - 8 zu dem Klemmleistenrohling erfolgt in einem weiteren Verfahrensschritt mittels des in der Figur 8 wiedergegebenen Werkzeuges 15 das Formen des Steges 6. Hierfür wird der Klemmleistenrohling 1' zwischen einem unteren Werkzeugteil 16 und einem oberen hierzu beweglichen Werkzeugteil 17 eingespannt, und zwar am Bereich 5' derart, daß der Klemmleistenrohling 1' mit einem inneren Abschnitt 6', dessen Breite gleich der Höhe des späteren Steges 6 ist, in eine Werkzeugöffnung 19 vorsteht. Dieses untere Werkzeugteil 16 weist an seiner Fläche 18, die den Rand der Werkzeugöffnung 19 bildet, die Kontur auf, die die Klemmleiste 1 im Bereich des Steges 6 aufweisen soll. Durch ein weiteres Werkzeugteil 20, welches von oben her in die Öffnung 19 des unteren Werkzeugteils 16 hineinbewegbar ist, erfolgt das Formen des Steges 6 durch Ziehen.

Die Erfindung wurde voranstehend an einem Ausführungsbeispiel beschreiben. Es versteht sich, daß Änderungen sowie Abwandlungen möglich sind, ohne daß dadurch der der Erfindung gemäß der Ansprüche zugrundeliegende Erfindungsgedanke verlassen wird. In der vorstehenden Beschreibung war jede Verbindung am Übergang 11 eine Hohlniet-Verbindung. Grundsätzlich sind auch andere Verbindungen denkbar, beispielsweise Punktschweißen, Toxen (Durchsetzfügen), Nieten usw., wenn auch die beschriebene Hohlnietverbindung eine bevorzugte Ausführung bildet.

### Bezugszeichenliste

- 1: Klemmleiste
- 1': Klemmleistenrohling
- 2: Bespannung
- 3: Ausschnitt
- 4: Fahrzeugdach
- 5: Schenkel
- 6: Steg
- 7, 8, 9: Abschnitt
- 10: Verbindungspunkt
- 11: Übergang
- 12: Öffnung
- 13: Aufkelchung
- 14: Öffnung
- 15: Werkzeug
- 16, 17: Werkzeugteil
- 18: Innenfläche
- 19: Öffnung
- 20: Ziehwerkzeug

## Patentansprüche

1. Klemmleiste für die Innenbespannung (2) zur Verwendung bei Fahrzeugen mit Schiebedach, bestehend aus einem aus Metallblech, vorzugsweise Stahlblech, hergestellten geschlossenen Rahmen mit einem Profil, welches einen die Rahmenöffnung umschließenden Schenkel (5) sowie an der Rahmenöffnung einen quer zur Ebene dieser Öffnung abgewinkelten Steg (6) aufweist, **dadurch gekennzeichnet,** daß die Klemmleiste (1) aus mehreren an Übergängen (11) in Umfangsrichtung des Rahmens aneinander anschließenden Abschnitten (7, 8, 9) besteht, und daß diese Abschnitte sowohl am Schenkel (5) als auch am Steg (6) an Verbindungspunkten (10) miteinander verbunden sind.

2. Klemmleiste nach Anspruch 1, dadurch gekennzeichnet, daß die Verbindungspunkte (10) als hohlnietenartige Verbindungen ausgeführt sind, und zwar dadurch, daß an jedem Verbindungspunkt (10) in das Material eines Abschnittes (7) eine Öffnung (12) mit einer hohlnietenartige Aufkelchung (13) eingebracht ist, die in eine Öffnung (14) des jeweils anderen Abschnitts (8, 9) eingeführt ist, und daß der über den anderen Abschnitt (8, 9) vorstehende Teil der Aufkelchung (13) zu der hohlnietenartigen Verbindung verformt ist.

3. Verfahren zur Herstellung einer Klemmleiste für die Innenbespannung (2) bei Fahrzeugen mit Schiebedach, bestehend aus einem aus Metallblech, vorzugsweise Stahlblech, hergestellten geschlossenen Rahmen mit einem Profil, welches einen die Rahmenöffnung umschließenden Schenkel (5) sowie an der Rahmenöffnung einen quer zur Ebene dieser Öffnung abgewinkelten Steg (6) aufweist, **dadurch gekennzeichnet,** daß Abschnitte (7 - 9) im flachem Zustand an Übergängen (11) überlappend zu einem Klemmleistenrohling (1') verbunden werden, daß hierfür sowohl in den den späteren Schenkel (5), als auch in den den späteren Steg (6) bildenden Bereichen (5', 6') an jedem Übergang (11) in das Material des einen Abschnitts (7) wenigstens eine Öffnung mit einer über die eine Oberflächenseite dieses Materials vorstehenden Aufkelchung (13) zur Bildung eines Hohlnietes und in dem anderen Abschnitt (8, 9) eine passende Öffnung (14) eingebracht wird, das nach dem Aufeinanderlegen der Abschnitte (7, 8; 7, 9) an dem jeweiligen Übergang (11) die Aufkelchungen (13) an der dem einen Abschnitt (7) abgewandten Seite des anderen Abschnittes (8, 9) zur Bildung einer Nietverbindung verformt werden, und daß anschließend der rahmenartige Klemmleistenrohling (1') an dem den späteren Steg (6) bildenden Bereich (6') in den abgewinkelten Steg (6) verformt wird.

4. Verfahren nach Anspruch 3, dadurch gekennzeichnet, daß der Klemmleistenrohling (1') zum Formen des Steges (6) in einem Werkzeug (15) zwischen einem ersten Werkzeugteil (16) und einem zweiten, beispielsweise als Niederhalter wirkenden Werkzeugteil (17) eines Form- und Ziehwerkzeuges (15) derart eingespannt wird, daß der Klemmleistenrohling (1') mit dem den späteren Steg (6) bildenden Bereich (6') in eine Öffnung (19) des ersten Werkzeugteils (16) vorsteht, und daß der Steg (6) mit einem dritten, als Ziehstempel wirkenden Werkzeugteil (20) dadurch geformt wird, daß dieses dritte Werkzeugteil (20) in die Öffnung (19) des ersten Werkzeugteils hineinbewegt wird.

## Claims

1. Clamping strip for the interior covering (2) to be used in vehicles with sliding roof, consisting of a closed frame made of sheet metal, preferably sheet steel, with a profile which has a leg (5) enclosing the frame aperture and which has, on the frame aperture, a stay (6), which is set at a right angle to the plane of this aperture, characterised in that the clamping strip (1) consists of several sections (7, 8, 9) which adjoin one another in a circumferential direction of the frame at junctions (11), and that these sections are interconnected both at the leg (5) and at the stay (6) at the connection points (10).

2. Clamping strip in accordance with claim 1, characterised in that the connection points (10) are designed as tubular-rivet-type connections such that at each connection point (10) an aperture (12) is provided into the material of a section (7), this aperture having a tubular-rivet-type flared widening (13) which is inserted into the aperture (14) of the other respective section (8, 9), and that that part of the flared widening (13) which projects over the other section (8, 9) is formed to give the tubular-rivet-type connection.

3. Method for producing a clamping strip for the interior covering (2) in vehicles with a sliding roof, consisting of a closed frame made of sheet metal, preferably sheet steel, with a profile which has a leg (5) enclosing the frame aperture and which has, on the frame aperture, a stay (6) which is set at a right angle to the plane of this aperture, characterised in that sections (7 - 9), in a flat condition, are connected overlapping at junctions (11) to form a clamping strip blank (1'); that for this purpose, in those areas (5', 6') which will later form the leg (5) and the stay (6), at each junction (11) at least one aperture is provided into the material of the one section (7), this aperture having a flared widening (13) which projects over the one surface side of this material, for the purpose of forming a tubular rivet, and a suitable aperture (14) is provided in the other section (8, 9); that after the sections EP 96 11 62 16.1-2306 WEIGEND, Horst (7, 8; 7, 9) are placed on top of each other at the corresponding junction (11), the flared widenings (13) are formed to effect a rivet connection on that side of the other section (8, 9) which faces away from the one section (7); and that subsequently, at the area (6') which is later to provide the stay (6), the frame-type clamping strip blank (1') is formed into the angled-off stay (6).

4. Method in accordance with claim 3, characterised in that order to form the stay (6), the clamping strip blank (1') is clamped in a tool (15), between a first tool part (16) and a second tool part (17) which acts, for example, as a holding-down device and is part of a forming and drawing tool (15), in such a manner that with the area (6') which will later form the stay (6), the clamping strip blank (1') projects into an aperture (19) of the first tool part (16), and that the stay (6) is formed by a third tool part (20) which acts as a drawing punch, by this third tool part (20) being moved into the aperture (19) of the first tool part.

## Revendications

1. Tringle à bride pour recouvrements intérieurs (2) de toits pour véhicules comportant des toits coulissants, constituée d'un cadre fermé en tôle métallique, en acier si possible, d'un profilé présentant une branche (5) entourant l'ouverture du cadre ainsi qu'une nervure angulaire (6) disposée transversalement par rapport au plan de cette ouverture, caractérisée en ce que le cadre (1) est composée de plusieurs segments (7, 8, 9) contigus aux points de jonction (11) dans le sens périphérique du cadre, ces segments étant reliés les uns aux autres tant au niveau de la branche (5) que de la nervure (6) par l'intermédiaire de points de raccordement (10).

2. Tringle à bride selon la revendication 1, caractérisée en ce que les points de raccordement (10) consistent en des raccordements par des rivets tubulaires, une ouverture (12) à cône (13) en forme de rivets tubulaires étant intégrée à chaque point de raccordement (10) dans le matériel d'un segment (7), ladite ouverture (14) étant introduite dans les autres segments (8, 9) et la partie du cône faisant saillie au-dessus de l'autre segment (8, 9) étant déformée vers le raccordement à rivet tubulaire.

3. Procédé de fabrication d'une tringle à bride pour recouvrement intérieur (2) de toits pour véhicules constituée d'un cadre fermé en tôle métallique, en acier de préférence, pourvu d'un profilé présentant une branche (5) entourant l'ouverture de cadre ainsi qu'une nervure (6) angulaire disposée transversalement par rapport au plan de cette ouverture, caractérisée en ce que les segments (7 - 9) en position à plat se chevauchent à des points de jonction (11) et sont reliés à un flan de tringle (1'), au moins une ouverture avec cône (13) saillante par rapport à la surface de ce matériel étant disposée tant dans la branche suivante (5) que dans les segments (5', 6') constituant la branche suivante (6), à chaque point de transition vers le matériel du segment, afin de former un rivet tubulaire et une ouverture adaptée (14) dans l'autre segment (8, 9), les cônes (13) étant déformés du côté du segment (8, 9) orienté vers l'autre segment (7) afin de former un assemblage rivé, après juxtaposition des segments (7, 8; 7, 9) aux points de jonction (11), et le flan en forme de cadre étant ensuite déformé en nervure angulaire (6) au niveau du segment (6') qui constitue l'entretoise suivante (6).

4. Procédé selon la revendication 3, caractérisé en ce que le flan (1') est tendu entre une première (16) et une deuxième pièce (17) d'un outil de moulage et de traction (15) agissant par exemple comme serre-flan, de telle sorte que le flan (1') avec le segment (6') formant l'entretoise suivante (6) fait saillie dans une ouverture (19) de la première pièce d'outil (16), et de telle sorte que l'entretoise (6) avec un troisième pièce d'outil (20) agissant comme poinçon d'emboutissage est formée par insertion de cette troisième pièce d'outil (20) dans l'ouverture (19) de la première pièce d'outil.
